# EUROPEAN PATENT SPECIFICATION

(11) **EP 4 486 617 B1**
(45) Date of publication and mention of the grant of the patent: **03.12.2025**
(21) Application number: 22707893.8
(22) Date of filing: 28.02.2022
(51) Int. Cl.: B61B 13/08, B61B 13/10, E01B 25/30, E01D 18/00, E01D 19/00, E01D 21/00, E01D 21/06

(54) **METHOD FOR ERECTING A TRANSPORTATION STRUCTURE AND PORTION OF A TRANSPORTATION STRUCTURE**
VERFAHREN ZUM ERRICHTEN EINER TRANSPORTSTRUKTUR UND TEIL EINER TRANSPORTSTRUKTUR
PROCÉDÉ POUR ÉRIGER UNE STRUCTURE DE TRANSPORT ET PARTIE D'UNE STRUCTURE DE TRANSPORT

(43) Date of publication of application: 08.01.2025
(73) Proprietor: ArcelorMittal, 1160 Luxembourg (LU)
(72) Inventor: SELLITTO, Giuseppe, 4000 Liège (BE); GREMLING, Michaël, 4100 Seraing (BE); DI SILVESTRO, Elena, 4140 Sprimont (BE)
(74) Representative: Lavoix
(86) International application number: PCT/IB2022/051722
(87) International publication number: WO 2023/161677

(56) References cited:
- CN-A- 108 755 294
- DE-A1- 102004 002 102
- US-A- 5 960 502

## Description

The present invention relates to a method for erecting a transportation structure comprising an assembly of tube segments, capable of being placed under low air pressure and through which pods may travel substantially free of air friction. This transportation system is often referred to as the hyperloop technology. The present invention also relates to the corresponding transportation structure.

Hyperloop technology is a proposed high-speed transportation system for both passenger and freight transport. It is basically a sealed system of tubes with low air pressure through which a pod may travel substantially free of air resistance or air friction. It has three major components: a tube, a pod and stations. The tube is a large sealed, low-pressure system that can be constructed above, below or on the ground. It contains the necessary infrastructure to ensure levitation/suspension, propulsion, braking... A vehicle runs inside this controlled environment and is often referred to as a pod. The pod employs electric levitation (either electro-magnetic or electro-dynamic) or aerodynamic levitation (using air-bearing skis) along with electromagnetic or aerodynamic propulsion to glide along a fixed guideway. A station is a facility where a pod can start or stop and where boarding/unboarding of passengers and loading/unloading of cargo are possible. A station is positioned at each extremity of the sealed system of tubes.

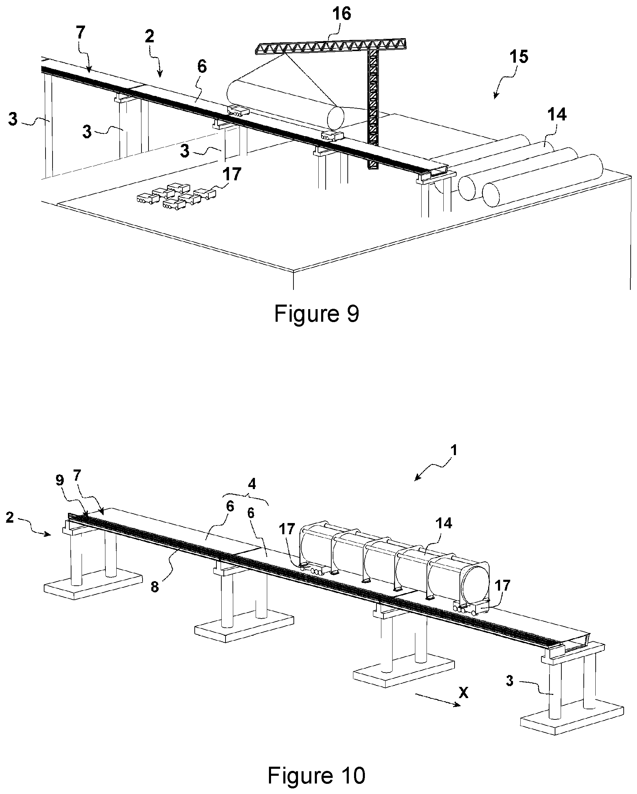

In the artists' views, an above-ground hyperloop structure is often represented in the form of tube segments whose ends simply rest on piers regularly spaced. This design is very appealing, but it does not provide a full understanding of important challenges during installation steps. One of these challenges is that the tube segments are huge pieces that cannot be easily transported to the construction site, even more so when the terrain is steep or difficult to access or if the hyperloop route is far away from existing roads. To avoid the transport of tube segments, it is known notably from US9517901 to manufacture and assemble the tubes on land with a movable tube fabrication machine (illustrated on Figure 9A) operable to move on land and directed along construction route. Alternatively, a moveable in-situ manufacturing system (illustrated on Figure 9B) may be located at a single location to make a number of tube sections (e.g., fifty tube sections), and then subsequently moved to a new location. In both cases, hyperloop routes can only be constructed if the moveable fabrication machine or the moveable manufacturing system can access the construction site. Moreover, among other drawbacks, it is worth mentioning that the energy supply might be tricky when moving along the construction route and, each time the machine/system would be moved, new electrical certifications may have to be obtained.

A method of erecting a portion of a transportation structure and a portion of a transportation structure are known from DE102004002102A1 and US5960502A.

A method of erecting a portion of a transportation structure comprising an assembly of tube segments placed under low air pressure and a portion of a transportation structure comprising an assembly of tube segments placed under low air pressure are known from a CN108755294A.

The aim of the present invention is therefore to remedy the drawbacks of the methods and structures of the prior art by providing a method for erecting an above-ground transportation structure which is compatible with rough terrains and for which the shipping of the different elements of the structure and their assembly is made easier.

For this purpose, a first subject of the present invention consists of a method for erecting a portion of a transportation structure comprising a first assembly of tube segments, capable of being placed under low air pressure and through which pods may travel substantially free of air friction, the method comprising:
- (a) erecting a substructure comprising a plurality of piers, a first plurality of girders positioned on at least some of the piers and forming a first transportation pathway running from a first extremity of the substructure to a second one and a plurality of platforms, either positioned on the piers or connected to the girders of the first transportation pathway, and forming a service pathway running from the first extremity of the substructure to the second one, the erecting step comprising:
   o (i) Starting from the first extremity, conveying with vehicle(s) the nth girder of the first plurality of girders along the first transportation pathway formed by the girders of the first plurality of girders previously positioned, positioning the nth girder at its use position and having the vehicle(s) return to the first extremity of the substructure along the service pathway,
   o (ii) Starting from the first extremity, conveying with vehicle(s) the yth platform of the plurality of platforms along the first transportation pathway formed by the girders of the first plurality of girders previously positioned, positioning the yth platform at its use position and having the vehicle(s) return to the first extremity of the substructure along the service pathway,
- (b) conveying, with vehicle(s), tube segments of the first assembly of tube segments along the first transportation pathway, to the use position of each tube segment, positioning each tube segment and having the vehicle(s) return along the service pathway.

The method according to the invention may also have the optional features listed below, considered individually or in combination:
- the platforms of the plurality of platforms forming the service pathway are positioned on the piers,
- the platforms of the plurality of platforms forming the service pathway are connected to the girders of the first transportation pathway,
- the portion of the transportation structure further comprises a second assembly of tube segments positioned on the first assembly of tube segments and wherein, in step b), tube segments of the second assembly of tube segments are further conveyed with vehicle(s) along the first transportation pathway, to the use position of each tube segment and positioned,
- each tube segment of the first assembly of tube segments is coupled to a tube segment of the second assembly of tube segments before being conveyed,
- the erecting step comprises, before sub-step i), a step of erecting the piers,
- the girders are positioned with a girder launcher crane supported by the substructure itself,
- the erecting step comprises, before sub-step i), an additional sub-step wherein a first section of the substructure comprising at least a pier, at least a girder from the first plurality of girders and at least a platform is erected at a stocking site,
- the nth girder of the first plurality of girders is positioned after the girder of the first transportation pathway forming the second extremity and the yth platform is positioned after the platform of the service pathway forming the second extremity,
- in step b), the vehicles are set up with the tube segments at the first extremity of the substructure,
- the step of erecting the xth section doesn't include positioning the nth girder of a second plurality of girders,
- The method further comprises the consecutive steps of:
   o c) Asynchronously erecting a second plurality of girders positioned on at least some of the piers and forming a second transportation pathway, running from the first extremity of the substructure to the second one, alongside the first transportation pathway, the asynchronous erecting step comprising, starting from the first extremity, conveying with vehicle(s) the nth girder of the second plurality of girders along the second transportation pathway formed by the girders of the second plurality of girders previously positioned, positioning the nth girder at its use position and having the vehicle(s) return to the first extremity of the substructure along the service pathway,
   o d) conveying, with vehicle(s), tube segments of a second assembly of tube segments along either the first transportation pathway or the second transportation pathway, from the first extremity of the substructure to the use position of each tube segment, positioning each tube segment and having the vehicle(s) return along the service pathway.

A second subject of the invention consists of a portion of a transportation structure for pods travelling substantially free of air friction in an assembly of tube segments placed under low air pressure, the portion of the transportation infrastructure comprising:
- a substructure comprising a plurality of piers, a first plurality of girders positioned on at least some of the piers and forming a first transportation pathway running from a first extremity of the substructure to a second one and a plurality of platforms, either positioned on the piers or connected to the girders of the first transportation pathway, and forming a service pathway running from the first extremity of the substructure to the second one,
- a superstructure comprising a first assembly of tube segments positioned on the first transportation pathway, the first assembly being capable of being placed under low air pressure and capable of allowing the circulation of pods travelling substantially free of air friction in the tube segments.

The portion of transportation structure according to the invention may also have the optional features listed below, considered individually or in combination:
- the first transportation pathway is composed of one continuous track of girders,
- the first transportation pathway is composed of two continuous tracks of girders, running parallel to one another,
- the superstructure comprises a second assembly of tube segments positioned on the first assembly of tube segments,
- the substructure does not comprise a second plurality of girders positioned on at least some of the piers and forming a second transportation pathway.

As it is apparent, the invention is based on the construction of a substructure composed of piers and girders which can withstand the transportation of heavy parts like girders, platforms or tube segments and which can support the superstructure composed of tube segments once the superstructure is positioned on the substructure. The substructure comprises a circulation loop so that, starting from a stocking site, vehicles circulating on the portion of the substructure already in place can transport each additional element of the transportation structure to its position at the construction site and return to the stocking site without preventing other vehicles from transporting the next elements to the construction site. The transportation structure can thus be easily constructed whatever the terrain.

Other characteristics and advantages of the invention will be described in greater detail in the following description.

The invention will be better understood by reading the following description, which is provided purely for purposes of explanation and is in no way intended to be restrictive, with reference to:
- Figure 1, which is a view of a portion of transportation structure according to a first variant of the invention,
- Figure 2, which is a detailed view of a portion of transportation structure according to a second variant of the invention,
- Figure 3, which illustrates the erection of the piers of a portion of transportation structure,
- Figure 4, which illustrates the erection of a first section of the substructure of a portion of transportation structure,
- Figure 5, which illustrates loading girders at the stocking site on vehicles positioned on a first section of the substructure of a portion of transportation structure,
- Figure 6, which illustrates conveying girders to the construction site along the first transportation pathway of the substructure,
- Figure 7, which illustrates positioning girders at the construction site,
- Figure 8, which illustrates positioning platforms at the construction site,
- Figure 9, which illustrates loading tube segments at the stocking site on vehicles positioned on a first section of the substructure of a portion of transportation structure,
- Figure 10, which illustrates conveying tube segments to the construction site along the first transportation pathway of the substructure,
- Figure 11, which illustrates positioning tube segments at the construction site,
- Figure 12, which illustrates conveying tube segments to the construction site along the first transportation pathway of the substructure,
- Figure 13, which is a general view of a portion of transportation structure under construction.

It should be noted that spatially relative terms such as "lower", "beneath", "inward", "inwards", "outward", "outwards"... as used in this application refer to the positions and orientations of the different elements of the portion of transportation structure once the latter has been erected. "Upstream" and "downstream" as used in this application refer to the direction of assembling when starting from a stocking site.

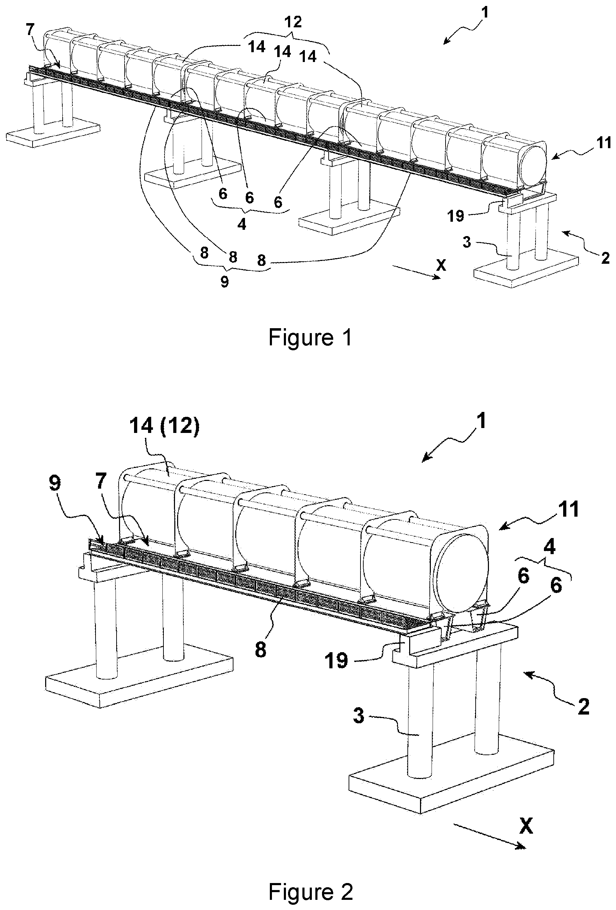

With reference to Figures 1 and 2, the portion of transportation structure 1 according to the invention first comprises a substructure 2 comprising a plurality of piers 3, a first plurality 4 of girders 6 positioned on at least a part of the piers (i.e. on at least some of the piers) and forming a first transportation pathway 7 running from a first extremity of the substructure to a second one and a plurality of platforms 8, either positioned on the piers or connected to the girders of the first transportation pathway, and forming a service pathway 9 running from the first extremity of the substructure to the second one.

According to the embodiment of the invention illustrated on Figures 1 and 2, the substructure has only one first transportation pathway 7 and one service pathway 9.

A portion of transportation structure is composed of a plurality of sections, preferably at least 3 sections. A section is defined by the length of a girder. It preferably matches the distance between two consecutive piers along the longitudinal axis X of the portion of the transportation structure.

A pier 3 is an upright support for a structure or superstructure such as an arch or bridge. It supports the superstructure and transfers loads of the superstructure to the foundations. The shape of the piers according to the invention is not particularly limited as long as they can support the first above-mentioned transportation pathway and optionally the service pathway.

According to a first variant illustrated on Figure 1, the piers are pile bent piers, i.e. piers made of two or more columns supporting a pier cap. The piers substantially extend in a plan perpendicular to the route, i.e. perpendicular to the girders' length.

According to a second variant not illustrated, the piers are V-shaped. The V substantially extends in a plan perpendicular to the route, i.e. perpendicular to the girders' length. The piers comprise two inclined arms, extending outwards. They can also comprise a pier cap, in the form of a horizontal beam linking the two arms. This pier cap provides additional seating for the girders and better distributes the load from the girders to the piers.

Others shapes such as Y, X, H, hammerhead piers, cantilevered piers, trestle piers, solid piers, simple columns are also possible.

The piers are preferably substantially regularly spaced along the longitudinal axis X of the portion of the transportation structure.

The substructure 2 of the portion of transportation structure 1 according to the invention also comprises a first plurality 4 of girders 6 positioned on at least some of the piers 3 and forming a first transportation pathway 7 running from a first extremity of the substructure to a second one.

A girder 6 is a support beam used in construction. It can be made of steel or concrete or it can be a composite structure. It can be in the form of a I-beam cross section composed of two load-bearing flanges separated by a stabilizing web. It can be in the form of a plurality of longitudinal members joined by cross-members. In the variants illustrated in Figures 1 and 2, the girders are box girders, i.e. girders that form an enclosed tube with multiple walls. Box girders are advantageous notably in that electrical wires can be positioned inside.

Preferably each girder 6 extends from one pier to the adjacent one. In particular the first end of the girder rests on a given pier and the second end of the girder rests on an adjacent pier along the longitudinal axis X of the portion of the transportation route or structure. The girders can thus be easily installed by simply positioning them on the piers. Alternatively, a girder can extend on more than two piers.

The first plurality 4 of girders 6 is positioned along the longitudinal axis of the portion of the transportation route or structure, so as to form a first transportation pathway 7. By transportation pathway, it is meant at least one continuous track designed to withstand the transportation of heavy parts like girders, platforms or tube segments with vehicles and designed to support the superstructure once the latter is positioned on the transportation pathway. For the sake of clarity, a transportation pathway is a temporary pathway; it allows the transportation of elements only during the erecting phase. Once an assembly of tube segments has been positioned on the transportation pathway, the latter is not a pathway anymore. The transportation pathway extends from the first longitudinal extremity of the substructure to the second longitudinal extremity of the substructure, whatever the length of the substructure.

According to a first variant of the transportation pathway illustrated on Figure 1, the first transportation pathway 7 is composed of one single continuous track of girders. In other words, all the girders 6 of the first plurality 4 of girders are positioned successively and continuously one after the other along the longitudinal axis X of the portion of the transportation structure. In that case, the girders are large enough to have vehicles circulate on them. This transportation pathway can be a substantially flat surface of metal or of concrete, preferably the upper surface of the girders. It can also be a railroad line which is part of the upper surface of the girders.

According to a second variant of the transportation pathway illustrated on Figure 2, the transportation pathway 7 is composed of two continuous tracks of girders 6, running parallel to one another. In other words, half the girders of the first plurality 4 of girders are positioned successively and continuously one after the other along the longitudinal axis of the portion of the transportation structure and half the girders of the first plurality 4 of girders are positioned successively and continuously one after the other and parallel to the first half. In that case, the girders are not large enough to have vehicles circulate on them but the two continuous tracks are spaced from one another so that vehicles can circulate with their inward wheels on the inward track and their outward wheels on the outward track. Rail beams can be part of the upper surface of the girders so that the two continuous tracks form a railroad line.

Optionally, bearings are positioned between the piers and the girders. A bearing is a device which supports the girders and transfer loads and movements from the girders and superstructure to the substructure and foundation. The bearings permit controlled movement and decrease the stress involved.

Thanks to the first plurality 4 of girders 6, during the construction phase, vehicles circulating on the part of the substructure already in place can easily transport each additional element of the portion of transportation structure to its position. Access to the ground along the construction route is not necessary anymore. This advantage will be further detailed when describing the erection method. During operation, the first plurality of girders supports the tube segments and contributes to the straightness of the assembly of tube segments. This straightness is important for the smooth traveling of the pods within the tube. Moreover, the combination of girders and tube segments acts as a beam which significantly increases the lateral torsional buckling of the structure.

The substructure 2 of the portion of transportation structure according to the invention further comprises a plurality of platforms 8 positioned along the longitudinal axis X and forming a service pathway 9. By service pathway, it is meant at least one continuous track designed to withstand vehicle traffic. It differs from a transportation pathway in that it is not designed to withstand the transportation of heavy parts like girders, platforms or tube segments and it is not designed to support the superstructure. The service pathway extends from the first longitudinal extremity of the substructure to the second longitudinal extremity of the substructure, whatever the length of the substructure. For the sake of clarity, the service pathway is above ground. It runs substantially parallel to the first transportation pathway.

A platform is a light structure suitable for vehicle traffic. The platforms are preferably made of steel. They preferably comprise a traffic deck, i.e. a surface suitable for vehicle traffic, possibly reinforced underneath by longitudinal reinforcements and/or transversal reinforcements. These reinforcements add structural rigidity to the traffic deck. The traffic deck can also comprise safety rails along the longitudinal edges of the traffic deck for safety reasons. The traffic deck, the reinforcements and the safety rails are preferably made of steel. The traffic deck is preferably a perforated surface, like a perforated steel sheet or metal grid.

There are different ways to link the platforms 8 to the rest of the substructure 2. According to a first variant of the platform positioning, illustrated on Figures 1 and 2, the platforms 8 are supported by the piers 3. Preferably, the longitudinal ends of the platforms are supported by the piers. In that case, the platforms have preferably the same length as the girders.

Consequently, the piers can comprise a bearing area 19, which can be for example a portion of the shape itself of the piers or an anchor point added to the pier. In the case illustrated on Figures 1 and 2, the bearing area 19 is in the form of a protrusion extending above a part of the pier cap. In that case, the platforms of the service pathway, in particular their longitudinal ends, can simply rest on the protrusions. Alternatively, the platforms of the service pathway can rest on other parts of the pier, such as the horizontal beam of a H-shaped pier if applicable, or can be anchored to a column.

According to a second variant of the platform positioning (not illustrated), the platforms are supported by the girders. In that case, the platforms can have the same length as the girders or can be of shorter length, preferably so that the platform's length is a divisor of the girder's length.

Thanks to the service pathway 9, during the construction phase, the vehicles having moved an element to the construction site can return to the stocking site without preventing other vehicles from transporting the next elements to the construction site. It speeds up the transportation of the elements to the construction site and thus shortens the erection phase. This advantage will be further detailed when describing the erection method. During operation, the service pathway can be advantageously used for maintenance, inspection and/or as an escape route. The service pathway can be permanent or temporary.

With reference to Figures 1 and 2, the transportation structure according to the invention further comprises a superstructure 11 comprising a first assembly 12 of tube segments 14 positioned on the first transportation pathway, the first assembly being capable of being placed under low air pressure and capable of allowing the circulation of pods travelling substantially free of air friction in the tube segments. By "low air pressure", it is meant an air pressure below atmospheric pressure, preferably below or equal to 10 kPa, more preferably between 10 Pa and 10 kPa.

The design of the tube segments 14 is not limited as long as they can be connected to one another, by their longitudinal ends, directly or indirectly, along the longitudinal axis so as to form an assembly as described above. In particular, the cross-section of the tube is not limited. It can notably be a circular cross-section or a polygonal cross-section. Practically speaking, the capability of the assembly to be placed under low air pressure is conferred by the features of the tube segment wall, the features of the connection between tube segments and the pumping equipment. In particular, the tube segment wall has to be airtight. Different ways of making a tube wall airtight are well known and the person skilled in the art will know how to select the features of the wall in each specific case. It can be for example a metallic tube made of welded plates or a metallic structure covered by an airtight membrane. Also, the connection between two tube segments has to be airtight. The airtightness of the connection can notably be provided by welding, by the addition of components such as an elastomer between tube segments that are bolted or clamped, or by means of an expansion joint. The person skilled in the art knows how to make connections airtight and will adapt the connection to each specific case. Also, the pumping equipment has to be correctly dimensioned so that a low air pressure can be reached and maintained in the assembly of tube segments, while taking into account the air leakages under operation. The person skilled in the art knows how to do so and will adapt the pumping equipment to each specific case.

Practically speaking, the capability of the assembly to allow the circulation of pods travelling substantially free of air friction in the tube segments is conferred by the infrastructure positioned inside the tube segments and which provide notably the levitation/suspension, propulsion, braking... Such infrastructures are already well known and the person skilled in the art will know how to adapt the infrastructure to each specific case.

Preferably, tube segments comprise legs distributed along the length of the segment and suitable for a tube segment to stand alone on the substructure on its legs. The number of legs and their position on the tube segment can be optimized during the structural design phase.

The tube segments are preferably made of steel. Steel has the advantages of being light, easily vacuum-tight and recyclable.

The tube segments can be connected to external and/or internal components along their length and/or at their ends. These components can be very diverse. To name a few of them, they can be stiffeners, photovoltaic panels, sensors...

According to a first embodiment of the superstructure, the superstructure has only a first assembly 12 of tube segments 14 positioned on a substructure having only a first transportation pathway 7. In the case illustrated on Figure 1, the first transportation pathway 7 supporting the single assembly of tube segments is made of a first plurality 4 of girders 6 laid out in one single continuous track. Alternatively, and as illustrated on Figure 2, the first transportation pathway 7 supporting the single assembly of tube segments is made of a first plurality 4 of girders 6 laid out in two continuous tracks of girders 6, running parallel to one another.

According to this first embodiment, the designs of the piers, of the girders and of the platforms and their respective positions are not limited. The variants of the piers, girders and platforms described above can be combined with this embodiment of the superstructure.

According to a second embodiment of the superstructure, the superstructure comprises a first assembly 12 of tube segments 14 and a second assembly 13 of tube segments 14, each assembly of tube segments being capable of being placed under low air pressure and capable of allowing the circulation of pods travelling substantially free of air friction in the tube segments. The characteristics and variants of the tube segments of the first assembly detailed above also apply to the tube segments of the second assembly. Tube segments of the first assembly and tube segments of the second assembly can be identical to ease logistics.

According to a variant of this embodiment, the substructure supporting the first and second assembly of tube segments has only a first transportation pathway 7. In that case, the second assembly 13 of tube segments 14 is positioned on the first assembly 12 of tube segments 14. In particular each tube segment of the second assembly of tube segments is positioned on a tube segment of the first assembly of tube segments. This positioning limits the footprint of the transportation structure. It also reduces the amount of switches and facilitates surface use, in particular for deviating towards stations. Optionally, each tube segment of the first assembly of tube segments is coupled to a tube segment of the second assembly of tube segments before being conveyed to the construction site. The coupling can be done with transversal connectors and/or with a structure surrounding the two tube segments. In that case, tube segments of the first assembly and tube segments of the second assembly are conveyed simultaneously along the first transportation pathway 7 as it will be further detailed when describing the erection method. It speeds up the transportation of the elements to the construction site and thus shortens the erection phase. According to that variant, the first transportation pathway can be made of a first plurality 4 of girders 6 indifferently laid out in one single continuous track of girders or in two continuous tracks of girders 6, running parallel to one another.

According to this second embodiment of the superstructure, the designs of the piers, of the girders and of the platforms and their respective positions are not limited. The variants of the piers, girders and platforms described above can be combined with this embodiment of the superstructure.

According to a first embodiment of the portion of transportation structure, the substructure 2 of the portion 1 of transportation structure does not comprise a second plurality of girders 6 positioned on at least some of the piers and forming a second transportation pathway.

According to a second embodiment of the portion of transportation structure (not illustrated):
- the substructure 2 of the portion 1 of transportation structure further comprises a second plurality of girders 6 positioned on at least some of the piers and forming a second transportation pathway, running from the first extremity of the substructure to the second one, alongside the first transportation pathway and,
- the superstructure 11 further comprises a second assembly of tube segments 14 positioned on the second transportation pathway, the second assembly being capable of being placed under low air pressure and capable of allowing the circulation of pods travelling substantially free of air friction in the tube segments.

The definition and variants detailed in relation to the first transportation pathway apply to the second transportation pathway. The definition and variants detailed in relation to the first plurality of girders apply to the second plurality of girders. Girders of the first plurality and girders of the second plurality can be identical to ease logistics.

By alongside, it is meant that both transportation pathways are substantially parallel to each other and run adjacent to each other. It is not limited to transportation pathways at the same level and/or rigorously parallel. The space between the first and second transportation pathways and/or the level of the first and second transportation pathways can be adjusted to the topography of land.

The characteristics and variants of the tube segments of the first assembly detailed above also apply to the tube segments of the second assembly. Tube segments of the first assembly and tube segments of the second assembly can be identical to ease logistics.

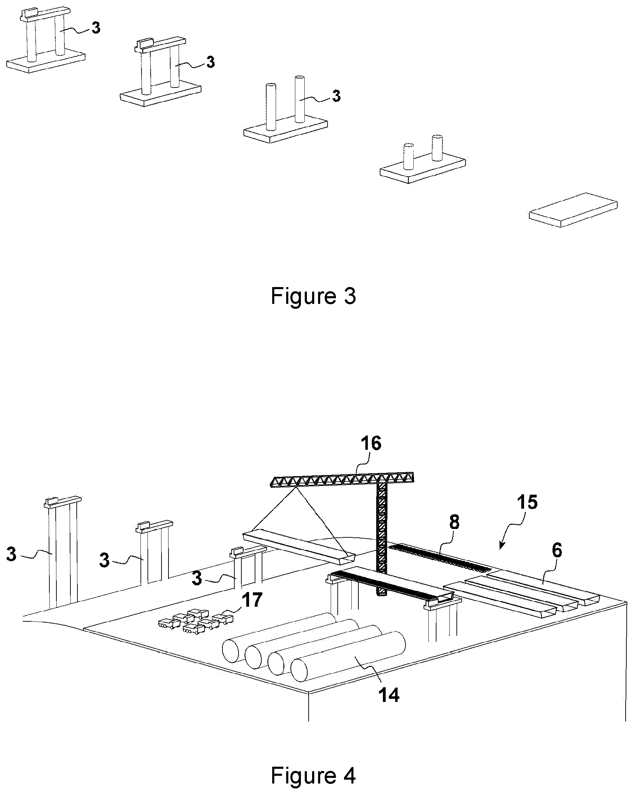

With reference to Figures 3 to 13, the method for erecting the portion 1 of the transportation structure according to the invention will now be described. Overall, this method comprises a first step of erecting the substructure 2 and a second step of erecting the superstructure 11. The step of erecting the substructure is described first.

In a first step of erecting the substructure 2, illustrated on Figure 3, the piers 3 of the portion 1 of the transportation structure are erected. They can be erected with any suitable method, such as panel formwork for example. Their erecting method includes the erection of piers foundations as required by the nature of the ground. This step can be done before the step of positioning the girders 6 or at least partially at the same time as the step of positioning the girders. In other words, the piers can be erected well before the girder positioning starts, for example weeks before. This notably gives time for concrete drying and soil compaction. Alternatively, some piers are still being erected when the girder positioning starts on the first erected piers.

As the footprint for erecting piers is limited and only light-duty vehicles are needed (bulldozers, concrete mixer trucks), the piers are preferably erected by ground access to the construction site of each pier.

In a second step of erecting the substructure 2, the girders 6 and platforms 8 of the portion 1 of transportation structure are erected.

As mentioned above, the erection of girders and platforms starts from a stocking site 15 where at least part of the elements of the transportation structure are stocked. Depending on the ease of transporting the elements up to the stocking site, some elements can be manufactured at the stocking site in manufacturing facilities. It can for example be the case of the girders and/or of the tube segments which are massive pieces. Manufacturing some elements on the stocking site minimizes the erection time at the construction site and it allows for better quality control of the manufactured elements.

The stocking site 15 is preferably located at the future site of a station, in particular a passenger and/or freight station. This limits the footprint of the construction phase. It also limits the civil work. In particular, the civil work done to build the stocking site and its optional manufacturing facilities can be used for erecting the station. The stocking site is preferably located at the ground level.

As illustrated on Figure 4, the first sub-step of the second step of erecting the girders 6 and platforms 8 is at the stocking site 15. This sub-step comprises the erection, at the stocking site, of at least a girder 6 from the first plurality of girders and at least a platform 8 forming at least part of a first section of the substructure. In particular, this sub-step comprises positioning a girder from the first plurality of girders on at least one pier. This positioning is preferably done with a crane 16 which can pick the elements on the stocking site and move them to the piers. The assembling order of the girder(s) and platform(s) can vary depending on the design of the substructure and notably depending on how the platform is linked to the rest of the substructure.

According to a first variant, the first section of substructure comprises one single pier. This is notably the case when the stocking site is positioned on a high ground. The first extremity of the first girder can then rest on the high ground while the second extremity of the first girder can rest on the pier positioned downhill. In that case, the first sub-step comprises positioning a girder from the first plurality of girders between the high ground and the pier.

According to a second variant illustrated on Figure 4, the first section of substructure comprises two piers. This is notably the case when the stocking site is positioned on a substantially flat ground. The first extremity of the first girder can then rest on the first pier while the second extremity of the first girder can rest on the second pier. In that case, the first sub-step comprises positioning a girder from the first plurality of girders on the two piers.

This first sub-step can comprise the erection, at the stocking site, of other sections, or parts of sections, of the substructure. The number of sections, or parts of sections, erected at the stocking site is conditioned by the ability of the crane from the stocking site to position the elements on the piers.

Once the girder(s) of the first plurality and the platform(s) of the first section of the substructure has been erected, the first section comprises a first extremity adjacent to the stocking site and a second extremity at its opposite end. The first extremity of the first section corresponds to the first extremity of the substructure of the portion of transportation structure erected according to the invention. Consequently, the position of the first extremity of the substructure of the portion of transportation structure erected according to the invention will not change over time during the erection of the portion of transportation structure. As for the second extremity of the first section, it corresponds to the second extremity of the substructure under construction, as long as no other section of substructure has been erected downstream of the first section. In other words, the position of the second extremity of the substructure under construction will change over time each time a new section is erected downstream of the already erected sections of transportation structure.

Thanks to the elements composing the erected substructure, vehicles 17 can circulate on the first transportation pathway 7 formed by at least one girder 6 of the first plurality 4 of girders and on the service pathway 9 formed by at least one platform 8. In particular, vehicles moving the elements to be positioned along the construction route can circulate on the first transportation pathway, starting from the first extremity and up to the second extremity of the substructure under construction. Once the elements have reached their use position, the vehicles can return to the first extremity via the service pathway.

Consequently, in a second sub-step in erecting the girders 6 and platforms 8, the girder(s) of the first plurality and the platform(s) of another section of the substructure can be erected as detailed hereafter. This section is referred to below as "the second section" for simplicity, assuming that only the girder(s) of the first plurality and the platform(s) of a first section has been erected at the stocking site.

The second section of the substructure comprises at least one girder 6 of the first plurality 4 of girders, at least one platform 8 of the plurality of platforms and at least one pier 3 of the substructure.

As explained above with regard to the pier erection, at least an additional pier has been erected downstream of the first section of the substructure.

Vehicles 17 suitable for the transport of heavy elements are positioned on the first section of the substructure, in particular on the first transportation pathway 7, more particularly on the first girder 6 of the first plurality 4 of girders. The vehicles can be lifted with a crane 16 or can reach their position with an access ramp or any other suitable equipment. The type of vehicles is not limited. It can be wheeled vehicles, such as trucks or train locomotives. Depending on the type of vehicles, the element(s) to be transported can be either loaded on one vehicle or loaded on several vehicles at the same time or the vehicle can be simply connected to the element(s), as in the case of a train locomotive for the transport of element(s) equipped of railroad wheels. In this description, the terms "set up" and "pair" are used to designate equally the loading of the vehicle(s) with an element and the connection of the vehicle(s) with an element. The term "freed" is used to designate equally the unloading of an element from the vehicle(s) and the disconnection of the vehicle(s) with an element.

Some vehicles are set up with the girder(s) of the first plurality and the platform(s) of the second section of the substructure. In particular, vehicle(s) are set up with at least one girder 6 of the first plurality 4 of girders and vehicle(s) are set up with at least one platform 8. The elements can be conveyed from the stocking site on the first section of the substructure or can be lifted from the stocking site up to the first section of the substructure with a crane. In the first case, they can be conveyed by the vehicles themselves. In the second case, the vehicles can be positioned and then set up.

The elements are then conveyed with the vehicles from the first extremity to the second extremity of the substructure under construction, which is adjacent to their use position. In particular:
- The at least one girder 6 of the first plurality 4 of girders is conveyed along the first transportation pathway 7 formed by the girders of the first plurality of girders positioned on the first section of substructure,
- The at least one platform 8 is conveyed along the first transportation pathway.

The order in which the elements are paired with vehicles and conveyed to the second extremity is not limited. Also, some elements can be conveyed to the second extremity while others are still being set up on vehicles.

Once an element has been conveyed to the second extremity of the substructure under construction, it is positioned at its use position, i.e. its position of service in the substructure. In particular:
- The at least one girder 6 of the first plurality 4 of girders is positioned downstream of the first transportation pathway 7. In particular, it is positioned after the girder of the first transportation pathway forming the second extremity of the substructure under construction. More particularly, it is positioned in line with the girder 4 of the first transportation pathway 7 forming the second extremity along the longitudinal axis X. Even more particularly, it is positioned so that a first end of the girder rests on the pier forming the second extremity of the first section of substructure and a second end of the girder rests on the at least one additional pier erected downstream of the first section of substructure. The at least one girder of the first plurality of girders is preferably positioned with a crane 18, more preferably with a girder launcher crane, supported by the substructure itself.
- The at least one platform 8 is positioned downstream of the service pathway 9. In particular, it is positioned after the platform of the service pathway forming the second extremity of the substructure under construction. More particularly, it is positioned in line, along the longitudinal axis X, with the platform of the service pathway forming the second extremity. Even more particularly, it is positioned so that a first end of the platform rests on the pier forming the second extremity of the first section of substructure and a second end of the platform rests on the additional pier erected downstream of the first section of substructure. The at least one platform is preferably positioned with the crane, more preferably with the girder launcher crane.

The use of a crane 18 supported by the substructure is beneficial. It further limits the footprint of the erection by eliminating the need for ground access to the construction site and ground preparation for a crane. It also makes the erecting method further independent of the topography and roughness of the terrain.

Once an element has been positioned, the corresponding freed vehicle(s) can return to the first extremity of the substructure along the service pathway. In particular:
- The vehicle(s) 17 freed from the at least one girder 6 of the first plurality 4 of girders is moved from the first transportation pathway 7 to the service pathway 9. In the case where the service pathway is not at the level of the first transportation pathway, the vehicle(s) can be lifted by a crane and put down on the service pathway. Preferably it is lifted with the girder launcher crane.
- The vehicle(s) 17 freed from the at least one platform 8 is moved from the first transportation pathway 7 to the service pathway 9. In the case where the service pathway is not at the level of the first pathway, the vehicle(s) can be lifted by a crane and put down on the service pathway. Preferably it is lifted with the girder launcher crane.

The order in which the elements are positioned is not limited. Also, some elements can be positioned while others are still being paired with vehicles or conveyed to the second extremity. Preferably, the at least one platform 8 is positioned first so that the vehicle(s) freed from the at least one girder 6 of the first plurality 4 of girders can be more easily transferred to the service pathway.

Once the girder(s) of the first plurality and the platform(s) of a second section of the substructure has been erected as detailed above, girders of the first plurality and the platforms of other sections of the substructure can be erected according to a similar process and as detailed below in relation to the erection of the girder(s) of the first plurality and the platform(s) of the xth section of the substructure.

The xth section of the substructure comprises at least the nth girder 6 of the first plurality 4 of girders, at least the yth platform 8 of the plurality of platforms and at least the zth pier 3 of the substructure. By default, x, y, z and n are different. In case where each section of the substructure comprises one single girder of the first plurality of girders and one single platform, x is equal to n and y. In that case, the nth girder of the first plurality of girders is also the xth and the yth platform of the plurality of platforms is also the xth. In case where the first section comprises 2 piers and the first transportation pathway 7 is composed of one single continuous track of girders and each section of the substructure other than the first one comprises one single pier, z is equal to n+1.

At least the zth pier 3 has first been erected downstream of the (x-1) first sections.

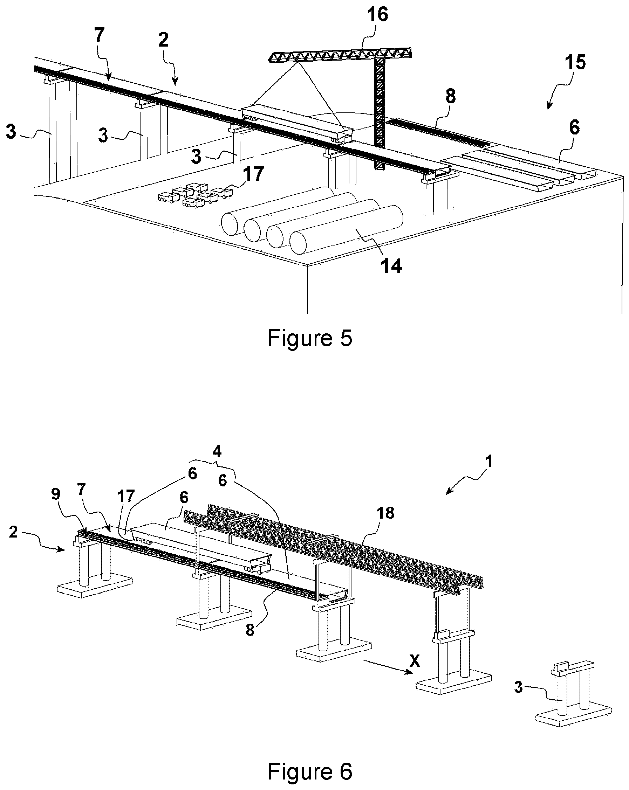

As illustrated on Figure 5, the vehicles 17 which have returned to the first extremity of the substructure after being freed from the girder(s) and platform(s) of a previous section(s) of the substructure are set up with the girder(s) of the first plurality and the platform(s) of the xth section of the substructure. In particular, vehicle(s) are set up with the nth girder of the first plurality of girders and vehicle(s) are set up with the yth platform of the plurality of platforms. If the xth section comprises additional girder(s) of the first plurality and/or platform(s), they are paired with the vehicles similarly.

As illustrated on Figure 6, starting from the first extremity of the substructure, the girder(s) 6 of the first plurality and the platform(s) 8 of the xth section of the substructure are conveyed with vehicles from the first extremity to the second extremity of the substructure under construction, which is adjacent to their use position. In particular:
- The nth girder 6 of the first plurality 4 of girders is conveyed along the first transportation pathway 7 formed by the girders of the first plurality of girders previously positioned. In particular, it is conveyed along the first transportation pathway 7 formed by the (n-1) girders of the first plurality of girders previously positioned.
- The yth platform 8 of the plurality of platforms is conveyed along the first transportation pathway 7 formed by the girders of the first plurality of girders previously positioned.

If the xth section comprises additional girder(s) of the first plurality and/or platform(s), they are conveyed similarly. The order in which the elements are paired with vehicles and conveyed to the second extremity is not limited. Also, some elements can be conveyed to the second extremity while others are still being paired with vehicles.

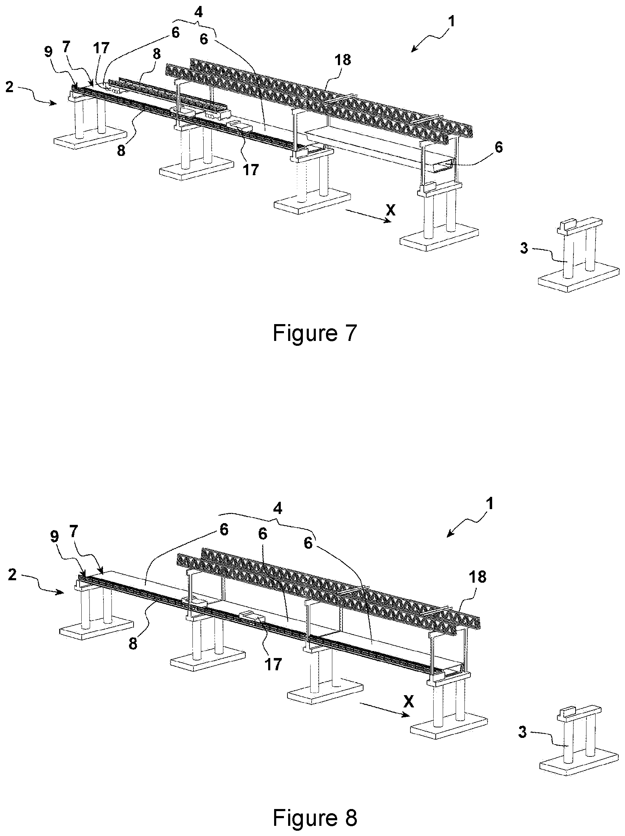

As illustrated on Figures 7 and 8, once an element has been conveyed to the second extremity of the substructure under construction, it is positioned at its use position. In particular:
- The nth girder 6 of the first plurality of girders is positioned downstream of the first transportation pathway 7. In particular, it is positioned after the girder of the first transportation pathway forming the second extremity of the substructure under construction. More particularly, it is positioned in line, along the longitudinal axis, with the (n-1)th girder of the first transportation pathway. Even more particularly, it is positioned so that a first end of the nth girder rests on the pier forming the second extremity (the (z-1)th pier) and a second end of the nth girder rests on the zth pier erected downstream of the substructure. The nth girder of the first plurality of girders is preferably positioned with a crane 18, more preferably with a girder launcher crane, supported by the substructure itself,
- The yth platform 8 is positioned downstream of the service pathway. In particular, it is positioned after the (y-1)th platform of the service pathway, i.e. the platform of the service pathway forming the second extremity of the substructure under construction. More particularly, it is positioned in line, along the longitudinal axis, with the platform of the service pathway forming the second extremity. Even more particularly, it is positioned so that a first end of the yth platform rests on the pier forming the second extremity (the (z-1)th pier) and a second end of the yth platform rests on the zth pier erected downstream of the substructure. The yth platform is preferably positioned with a crane 18, more preferably with a girder launcher crane, supported by the substructure itself,

As illustrated on Figures 7 and 8, once an element of the xth section of substructure has been positioned, the corresponding freed vehicle(s) can return to the first extremity of the substructure along the service pathway. In particular:
- The vehicle(s) freed from the nth girder of the first plurality of girders is moved from the first transportation pathway 7 to the service pathway 9,
- The vehicle(s) freed from the yth platform is moved from the first transportation pathway 7 to the service pathway 9.

In the case where the service pathway is not at the level of the first transportation pathway, the vehicle(s) can be lifted by a crane and put down on the service pathway. Preferably it is lifted with the girder launcher crane.

If the xth section comprises additional girder(s) of the first plurality and/or platform(s), they are positioned similarly and the corresponding vehicles return to the first extremity similarly. The order in which the elements of the xth section are positioned is not limited. Also, some elements of the xth section can be positioned while other elements of the xth section or of subsequent sections are being paired with vehicles or conveyed to the second extremity. Preferably, the yth platform 8 is positioned first so that the vehicle(s) conveying the nth girder of the first plurality of girders can be more easily transferred from the first transportation pathway to the service pathway.

Optionally, the erecting step doesn't include, concomitantly with conveying and positioning the nth girder of the first plurality of girders, conveying the nth girder of a second plurality of girders and positioning it at its use position alongside the nth girder of the first plurality of girders. In other words, the step of erecting the girder(s) and platform(s) of the xth section doesn't include positioning the nth girder of a second plurality of girders. Yet in other words, for a transportation pathway composed of one single continuous track of girders, the positioning of the (n+1)th girder of the first plurality of girders is done before the nth girder of an optional second plurality of girders is positioned at its use position alongside the nth girder of the first plurality of girders. For a transportation pathway composed of two continuous tracks of girders, the positioning of the (n+2)th girder of the first plurality of girders is done before the nth girder of an optional second plurality of girders is positioned at its use position alongside the nth girder of the first plurality of girders.

At the end of the step of erecting the substructure, the last girder of the first plurality of girders is positioned on the last piers of the substructure. These piers can be adjacent to or shared with a second portion of transportation structure erected or being erected as an extension of the relevant portion of transportation structure along the longitudinal axis of the transportation route. This second portion of transportation structure is erected from a second stocking site, possibly at the future site of a station, located downstream of the relevant portion. This second portion of transportation structure is built by erecting its substructure backwards of the erection of the substructure of the relevant portion. In other words, each portion is built from a stocking site in direction of another stocking site and at some point, the two portions join. The last girder of the first plurality of girders of the relevant portion is thus adjacent to the last girder of the first plurality of the second portion so that there is a continuity in the first transportation pathway.

Once all the sections of the substructure of the portion of the transportation structure have been assembled at least in part, the superstructure can be erected.

Overall, and as illustrated on Figures 9 to 13, the superstructure assembling is done by conveying, with vehicles, tube segments 14 along the first transportation pathway 7 to the use position of each tube segment, positioning each tube segment and having the vehicles return along the service pathway 9. As the tube segments are positioned on the substructure and block the transportation pathway, the superstructure assembling is done backwards compared to the substructure assembling. In other words, the tube segments are first positioned at the second extremity of the substructure and then positioned one in front of the other in direction of the first extremity of the substructure, i.e. one upstream of the other.

The tube segments are stocked at the stocking site 15 and conveyed from this stocking position. Consequently, the vehicles 17 are set up at the first extremity of the substructure with the tube segments 14 and they convey them from this first extremity to their use position along the first transportation pathway 7. Then the freed vehicles return to the first extremity of the substructure along the service pathway 7.

In particular, in a first step illustrated on Figures 9 to 11, a first tube segment 14 is conveyed with vehicle(s) 17 to the second extremity of the substructure 2. The vehicle(s) are freed from the first tube segment and can return along the service pathway 9. The first tube segment 14 is positioned on the last girder 6 of the substructure forming the second extremity of the substructure. Freeing the vehicle from the tube segment and positioning the tube segment can be done with a crane, possibly a girder launcher crane. In the case where a second portion of transportation structure is adjacent to the last girder of the substructure, the first tube segment can be connected to a tube segment of the second portion, preferably in an airtight connection.

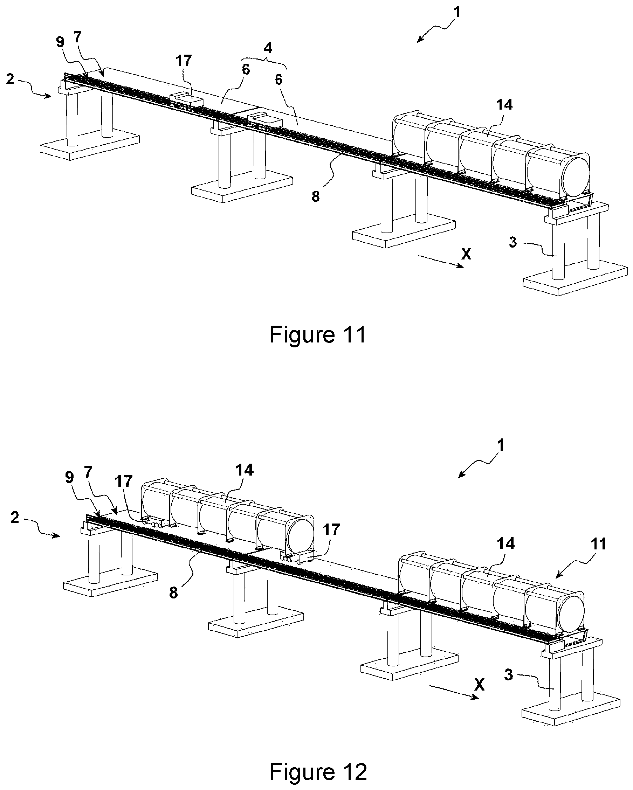

In a second step illustrated on Figure 12, a second tube segment 14 is conveyed with vehicle(s) 17 up to the first tube segment. The vehicle(s) are freed from the second tube segment and can return along the service pathway 9. The second tube segment is positioned adjacent to the first tube segment and upstream along the longitudinal axis X. The first and second segments can then be connected to one another, preferably in an airtight connection.

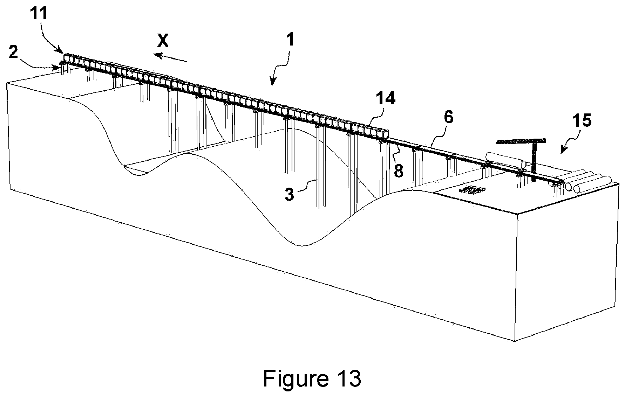

As illustrated on Figure 13, the next tube segments are conveyed and positioned similarly until the last tube segment is positioned at the first extremity of the substructure.

In the case where the superstructure comprises a first assembly 12 of tube segments 14 and a second assembly 13 of tube segments 14 positioned on the first assembly, the tube segments of both assemblies can be conveyed individually along the first transportation pathway 7. At their use position, a tube segment of the first assembly is first positioned on the first transportation pathway 7 and then a tube segment of the second assembly is positioned on the tube segment of the first assembly. Alternatively, each tube segment of the first assembly of tube segments is coupled to a tube segment of the second assembly of tube segments at the stocking position and the coupled segments are then conveyed along the first transportation pathway. Tube segments of the first assembly and tube segments of the second assembly can be identical to ease logistics.

According to one embodiment of the method for erecting a portion 1 of a transportation structure, the method further comprises an additional step wherein a second plurality of girders is assembled on the portion 1 of transportation structure in a staggered manner with respect to the assembly of the first plurality 4 of girders 6 and of the plurality of platforms 8. By "in a staggered manner" or by "asynchronously", it is meant that the positioning of the girder(s) of the first plurality of a given section of a portion of transportation structure comprising two pluralities of girders starts before the girder(s) of the second plurality of the previous section have been positioned. In particular, for a transportation pathway 7 composed of one single continuous track of girders, the positioning of at least the (n+1)th girder of the first plurality of girders is done before the nth girder of the second plurality of girders is positioned at its use position alongside the nth girder of the first plurality of girders. For a transportation pathway composed of two continuous tracks of girders, the positioning of at least the (n+2)th girder of the first plurality of girders is done before the nth girder of the second plurality of girders is positioned at its use position alongside the nth girder of the first plurality of girders.

According to one variant, the additional step starts only after the first assembly 12 of tube segments 14 has been erected. It is typically the case when it is decided to increase the transport capacity of an existing transportation structure.

According to another variant, the additional step starts after the first plurality 4 of girders 6 and the plurality of platforms 8 of the portion of transportation structure have been erected and before the tube segments of the first assembly 12 of tube segments 14 are conveyed on the portion of transportation structure. Such asynchronous assembling notably makes it possible to stock at least some of the tube segments on the first transportation pathway once it is complete while the girders of the second plurality of girders are conveyed. Doing so helps minimizing the size of the stocking site and speeds up the assembling of the tube segments as they are stocked closer to their use position.

In particular, the method comprises the consecutive steps of:
- Asynchronously erecting a second plurality of girders 6 positioned on at least some of the piers and forming a second transportation pathway, running from the first extremity of the substructure to the second one, alongside the first transportation pathway, the asynchronous erecting step comprising, starting from the first extremity, conveying with vehicle(s) 17 the nth girder of the second plurality of girders along the second transportation pathway formed by the girders of the second plurality of girders previously positioned, positioning the nth girder at its use position and having the vehicle(s) return to the first extremity of the substructure along the service pathway,
- conveying, with vehicle(s) 17, tube segments 14 of a second assembly of tube segments along either the first transportation pathway or the second transportation pathway, from the first extremity of the substructure to the use position of each tube segment, positioning each tube segment and having the vehicle(s) return along the service pathway.

The way the girders of the second plurality of girders are conveyed and positioned is similar to the way the girders of the first plurality of girders are conveyed and positioned. The details and variants provided above with regards to the erecting method of the first plurality of girders apply here.

In particular, in a first sub-step, at least one girder of the second plurality of girders is positioned on at least one pier of the first section of the substructure, alongside a girder of the first plurality.

In particular, in a second sub-step, vehicles positioned on the second transportation pathway formed by the at least one girder already positioned are set up with at least one girder of the second plurality of girders. Then the latter is conveyed along the second transportation pathway formed by the girder(s) of the second plurality of girders positioned on the first section of substructure. Then the at least one girder 6 of the second plurality of girders is further positioned downstream of the second transportation pathway. In particular, it is positioned after the girder of the second transportation pathway forming the second extremity of the second transportation pathway under construction. In other words, it is positioned alongside the nth girder of the first plurality. Finally, the vehicle(s) 17 freed from the at least one girder 6 of the second plurality of girders is moved from the second transportation pathway to the service pathway 9 and return to the first extremity of the substructure along the service pathway.

Once the first girders of the second plurality of girders have been erected as detailed above, the other girders can be erected one after the other according to a similar process.

Once all the girders of the second plurality of girders have been assembled, the second assembly of tube segments can be erected.

The way the tube segments of the second assembly are conveyed and positioned is similar to the way the tube segments of the first assembly are conveyed and positioned. The details and variants provided above with regards to the erecting method of the first assembly of tube segments apply here.

In particular, according to the variant wherein the additional step starts only after the first assembly 12 of tube segments 14 has been erected, a first tube segment 14 of the second assembly is conveyed with vehicle(s) 17 along the second transportation pathway to the second extremity of the second transportation pathway, which is its use position. The vehicle(s) are freed from the first tube segment and can return along the service pathway 9. The first tube segment 14 is positioned on the last girder 6 of the second transportation pathway. A second tube segment 14 is conveyed with vehicle(s) 17 along the second transportation pathway up to the first tube segment. The vehicle(s) are freed from the second tube segment and can return along the service pathway 9. The first and second segments can then be connected to one another, preferably in an airtight connection. The next tube segments of the second assembly are conveyed and positioned similarly until the last tube segment is positioned at the first extremity of the substructure.

In particular, according to the variant wherein the additional step starts before the tube segments of the first assembly 12 of tube segments 14 are conveyed on the portion of transportation structure, the tube segments of the second assembly can be conveyed along either the first transportation pathway or the second transportation pathway while the tube segments of the first assembly are conveyed along the first transportation pathway, as detailed previously. Preferably, the tube segments of the second assembly are conveyed along the second transportation pathway while the tube segments of the first assembly are conveyed along the first transportation pathway to speed up the assembling. If some of the tube segments of the first assembly have been stocked on the first transportation pathway, they can be paired with vehicles at their stocking position, conveyed along the remaining part of the first transportation pathway and positioned, while tube segments of the second assembly are conveyed along the second transportation pathway and positioned.

## Claims

1. Method for erecting a portion (1) of a transportation structure comprising a first assembly (12) of tube segments (14), capable of being placed under low air pressure and through which pods may travel substantially free of air friction, the method comprising:
- (a) erecting a substructure (2) comprising a plurality of piers (3), a first plurality (4) of girders (6) positioned on at least some of the piers and forming a first transportation pathway (7) running from a first extremity of the substructure to a second one and a plurality of platforms (8), either positioned on the piers or connected to the girders of the first transportation pathway, and forming a service pathway (9) running from the first extremity of the substructure to the second one, the erecting step comprising:
o (i) Starting from the first extremity, conveying with vehicle(s) (17) the nth girder (6) of the first plurality of girders along the first transportation pathway (7) formed by the girders of the first plurality of girders previously positioned, positioning the nth girder at its use position and having the vehicle(s) return to the first extremity of the substructure along the service pathway (9),
o (ii) Starting from the first extremity, conveying with vehicle(s) (17) the yth platform (8) of the plurality of platforms along the first transportation pathway (7) formed by the girders of the first plurality of girders previously positioned, positioning the yth platform at its use position and having the vehicle(s) return to the first extremity of the substructure along the service pathway (9),
- (b) conveying, with vehicle(s) (17), tube segments (14) of the first assembly (12) of tube segments along the first transportation pathway (7), to the use position of each tube segment, positioning each tube segment and having the vehicle(s) return along the service pathway.

2. Method according to claim 1 wherein the platforms (8) of the plurality of platforms forming the service pathway (3) are positioned on the piers (3).

3. Method according to claim 1 wherein the platforms (8) of the plurality of platforms forming the service pathway (9) are connected to the girders (6) of the first transportation pathway (7).

4. Method according to claim 1 wherein the portion of the transportation structure further comprises a second assembly (13) of tube segments (14) positioned on the first assembly (12) of tube segments and wherein, in step b), tube segments (14) of the second assembly (13) of tube segments are further conveyed with vehicle(s) (17) along the first transportation pathway (7), to the use position of each tube segment and positioned.

5. Method according to claim 4 wherein each tube segment (14) of the first assembly (12) of tube segments is coupled to a tube segment (14) of the second assembly (13) of tube segments before being conveyed.

6. Method according to any one of the preceding claims wherein the erecting step comprises, before sub-step i), a step of erecting the piers.

7. Method according to any one of the preceding claims wherein the girders are positioned with a girder launcher crane supported by the substructure itself.

8. Method according to any one of the preceding claims wherein the erecting step comprises, before sub-step i), an additional sub-step wherein at least a girder from the first plurality of girders and at least a platform of a first section of the substructure are erected at a stocking site.

9. Method according to any one of the preceding claims wherein the nth girder (6) of the first plurality (4) of girders is positioned after the girder of the first transportation pathway (7) forming the second extremity and the yth platform (8) is positioned after the platform of the service pathway (9) forming the second extremity.

10. Method according to any one of the preceding claims wherein, in step b), the vehicles (17) are set up with the tube segments (14) at the first extremity of the substructure.

11. Portion (1) of a transportation structure for pods travelling substantially free of air friction in an assembly of tube segments placed under low air pressure, the portion of the transportation infrastructure comprising:
- a substructure (2) comprising a plurality of piers (3), a first plurality (4) of girders (6) positioned on at least some of the piers and forming a first transportation pathway (7) running from a first extremity of the substructure to a second one and a plurality of platforms (8), either positioned on the piers or connected to the girders of the first transportation pathway, and forming a service pathway (9) running from the first extremity of the substructure to the second one,
- a superstructure (11) comprising a first assembly (12) of tube segments (14) positioned on the first transportation pathway, the first assembly being capable of being placed under low air pressure and capable of allowing the circulation of pods travelling substantially free of air friction in the tube segments.

12. Portion of a transportation structure according to claim 11 wherein the first transportation pathway (7) is composed of one continuous track of girders (6).

13. Portion of a transportation structure according to claim 11 wherein the first transportation pathway (7) is composed of two continuous tracks of girders (6), running parallel to one another.

14. Portion of a transportation structure according to any one of claims 11 to 13 wherein the superstructure comprises a second assembly (13) of tube segments (14) positioned on the first assembly (12) of tube segments.

15. Portion of a transportation structure according to any one of claims 11 to 14 wherein the substructure does not comprise a second plurality of girders (6) positioned on at least some of the piers and forming a second transportation pathway.

## Patentansprüche

1. Verfahren zum Errichten eines Abschnitts (1) einer Transportstruktur, umfassend eine erste Anordnung (12) von Rohrsegmenten (14), die in der Lage sind, unter niedrigem Luftdruck platziert zu werden können und durch die sich Gondeln im Wesentlichen ohne Luftreibung bewegen können, das Verfahren umfassend:
- (a) Errichten eines Unterbaus (2), umfassend eine Vielzahl von Pfeilern (3), eine erste Vielzahl (4) von Trägern (6), die auf mindestens einigen der Pfeiler positioniert sind und einen ersten Transportweg (7) bilden, der von einem ersten Ende des Unterbaus zu einem zweiten Ende verläuft, und eine Vielzahl von Plattformen (8), die entweder auf den Pfeilern positioniert oder mit den Trägern des ersten Transportwegs verbunden sind, und die einen Serviceweg (9) bilden, der von dem ersten Ende des Unterbaus zu dem zweiten Ende verläuft, der Errichtungsschritt umfassend:
∘ (i) Beginnend an dem ersten Ende, Transportieren des n-ten Trägers (6) der ersten Vielzahl von Trägern mit Fahrzeug(en) (17) entlang des ersten Transportwegs (7), der durch die zuvor positionierten Träger der ersten Vielzahl von Trägern gebildet ist, Positionieren des n-ten Trägers in seiner Gebrauchsposition und Zurückfahren des/der Fahrzeugs/Fahrzeuge zu dem ersten Ende des Unterbaus entlang des Servicewegs (9),
∘ (ii) Beginnend an dem ersten Ende, Transportieren der y-ten Plattform (8) der Vielzahl von Plattformen mit Fahrzeug(en) (17) entlang des ersten Transportwegs (7), der durch die zuvor positionierten Träger der ersten Vielzahl von Trägern gebildet ist, Positionieren der y-ten Plattform in seiner Gebrauchsposition und Zurückfahren des/der Fahrzeugs/Fahrzeuge zu dem ersten Ende des Unterbaus entlang des Servicewegs (9),
- (b) Transportieren, mit Fahrzeug(en) (17) von Rohrsegmenten (14) der ersten Anordnung (12) von Rohrsegmenten entlang des ersten Transportwegs (7) zu der Gebrauchsposition von jedem Rohrsegment, Positionieren von jedem Rohrsegment und Zurückfahren des/der Fahrzeug(e) entlang des Servicewegs.

2. Verfahren nach Anspruch 1, wobei die Plattformen (8) der Vielzahl von Plattformen, die den Serviceweg (3) bilden, auf den Pfeilern (3) positioniert werden.

3. Verfahren nach Anspruch 1, wobei die Plattformen (8) der Vielzahl von Plattformen, die den Serviceweg (9) bilden, mit den Trägern (6) des ersten Transportwegs (7) verbunden werden.

4. Verfahren nach Anspruch 1, wobei der Abschnitt der Transportstruktur ferner eine zweite Anordnung (13) von Rohrsegmenten (14) umfasst, die auf der ersten Anordnung (12) von Rohrsegmenten positioniert ist, und wobei in Schritt b) Rohrsegmente (14) der zweiten Anordnung (13) von Rohrsegmenten mit Fahrzeug(en) (17) entlang des ersten Transportwegs (7) zur Gebrauchsposition von jedem Rohrsegment transportiert und positioniert werden.

5. Verfahren nach Anspruch 4, wobei jedes Rohrsegment (14) der ersten Anordnung (12) von Rohrsegmenten mit einem Rohrsegment (14) der zweiten Anordnung (13) von Rohrsegmenten gekoppelt wird, bevor es transportiert wird.

6. Verfahren nach einem der vorherigen Ansprüche, wobei der Errichtungsschritt vor Teilschritt i) einen Schritt eines Errichtens der Pfeiler umfasst.

7. Verfahren nach einem der vorherigen Ansprüche, wobei die Träger mit einem von dem Unterbau an sich getragenen Trägerabsetzkran positioniert werden.

8. Verfahren nach einem der vorherigen Ansprüche, wobei der Errichtungsschritt vor Teilschritt i) einen zusätzlichen Teilschritt umfasst, bei dem mindestens ein Träger der ersten Vielzahl von Trägern und mindestens eine Plattform eines ersten Abschnitts des Unterbaus an einem Lagerplatz errichtet werden.

9. Verfahren nach einem der vorherigen Ansprüche, wobei der n-te Träger (6) der ersten Vielzahl (4) von Trägern nach dem Träger des ersten Transportwegs (7), der das zweite Ende bildet, und die y-te Plattform (8) nach der Plattform des Servicewegs (9), der das zweite Ende bildet, angeordnet wird.

10. Verfahren nach einem der vorherigen Ansprüche, wobei in Schritt b) die Fahrzeuge (17) mit den Rohrsegmenten (14) an dem ersten Ende des Unterbaus aufgestellt werden.

11. Abschnitt (1) einer Transportstruktur für Gondeln, die sich im Wesentlichen ohne Luftreibung in einer Anordnung von unter niedrigem Luftdruck stehenden Rohrsegmenten bewegen, der Abschnitt der Transportinfrastruktur umfassend:
- Errichtungsschritt (2), umfassend eine Vielzahl von Pfeilern (3), eine erste Vielzahl (4) von Trägern (6), die auf mindestens einigen der Pfeiler positioniert sind und einen ersten Transportweg (7) bilden, der von einem ersten Ende des Unterbaus zu einem zweiten Ende verläuft, und eine Vielzahl von Plattformen (8), die entweder auf den Pfeilern positioniert oder mit den Trägern des ersten Transportwegs verbunden sind, und die einen Serviceweg (9) bilden, der von dem ersten Ende des Unterbaus zu dem zweiten Ende verläuft,
- einen Aufbau (11), umfassend eine erste Anordnung (12) von Rohrsegmenten (14), die auf dem ersten Transportweg positioniert sind, wobei die erste Anordnung in der Lage ist, unter niedrigen Luftdruck gesetzt zu werden und die Zirkulation von Gondeln zu ermöglichen, die sich im Wesentlichen frei von Luftreibung in den Rohrsegmenten bewegen.

12. Abschnitt einer Transportstruktur nach Anspruch 11, wobei der erste Transportweg (7) aus einer durchgehenden Spur von Trägern (6) besteht.

13. Abschnitt einer Transportstruktur nach Anspruch 11, wobei der erste Transportweg (7) aus zwei parallel zueinander verlaufenden, durchgehenden Spuren von Trägern (6) gebildet ist.

14. Abschnitt einer Transportstruktur nach einem der Ansprüche 11 bis 13, wobei der Aufbau eine zweite Anordnung (13) von Rohrsegmenten (14) umfasst, die auf der ersten Anordnung (12) von Rohrsegmenten angeordnet sind.

15. Abschnitt einer Transportstruktur nach einem der Ansprüche 11 bis 14, wobei die Unterstruktur keine zweite Vielzahl von Trägern (6) umfasst, die auf mindestens einigen der Pfeiler angeordnet sind und einen zweiten Transportweg bilden.

## Revendications

1. Procédé d'érection d'une partie (1) d'une structure de transport comprenant un premier ensemble (12) de segments de tube (14), pouvant être placé sous une faible pression d'air et à travers lequel des nacelles peuvent se déplacer sensiblement sans frottement d'air, le procédé comprenant :
- (a) l'érection d'une sous-structure (2) comprenant une pluralité de piliers (3), une première pluralité (4) de poutres (6) positionnées sur au moins certains des piliers et formant une première voie de transport (7) allant d'une première extrémité de la sous-structure à une seconde et une pluralité de plateformes (8), soit positionnées sur les piliers, soit reliées aux poutres de la première voie de transport, et formant une voie de service (9) allant de la première extrémité de la sous-structure à la seconde, l'étape d'érection comprenant :
∘ (i) En partant de la première extrémité, le transport avec le ou les véhicules (17) de la n^{e} poutre (6) de la première pluralité de poutres le long de la première voie de transport (7) formée par les poutres de la première pluralité de poutres précédemment positionnées, le positionnement de la n^{e} poutre à sa position d'utilisation et le renvoi du ou des véhicules à la première extrémité de la sous-structure le long de la voie de service (9),
∘ (ii) En partant de la première extrémité, le transport avec le ou les véhicules (17) de la y^{e} plate-forme (8) de la pluralité de plateformes le long de la première voie de transport (7) formée par les poutres de la première pluralité de poutres précédemment positionnées, le positionnement de la y^{e} plateforme à sa position d'utilisation et le renvoi du ou des véhicules à la première extrémité de la sous-structure le long de la voie de service (9),
- (b) le transport, avec le ou les véhicules (17), de segments de tube (14) du premier ensemble (12) de segments de tube le long de la première voie de transport (7), jusqu'à la position d'utilisation de chaque segment de tube, le positionnement de chaque segment de tube et le retour du ou des véhicules le long de la voie de service.

2. Procédé selon la revendication 1 dans lequel les plateformes (8) de la pluralité de plateformes formant la voie de service (3) sont positionnées sur les piliers (3).

3. Procédé selon la revendication 1 dans lequel les plateformes (8) de la pluralité de plateformes formant la voie de service (9) sont reliées aux poutres (6) de la première voie de transport (7).

4. Procédé selon la revendication 1 dans lequel la partie de la structure de transport comprend en outre un second ensemble (13) de segments de tube (14) positionné sur le premier ensemble (12) de segments de tube et dans lequel, à l'étape b), les segments de tube (14) du second ensemble (13) de segments de tube sont encore transportés avec le ou les véhicules (17) le long de la première voie de transport (7), jusqu'à la position d'utilisation de chaque segment de tube et positionnés.

5. Procédé selon la revendication 4 dans lequel chaque segment de tube (14) du premier ensemble (12) de segments de tube est couplé à un segment de tube (14) du second ensemble (13) de segments de tube avant d'être transporté.

6. Procédé selon l'une quelconque des revendications précédentes dans lequel l'étape d'érection comprend, avant la sous-étape i), une étape d'érection des piliers.

7. Procédé selon l'une quelconque des revendications précédentes dans lequel les poutres sont positionnées à l'aide d'une grue de lancement de poutres soutenue par la sous-structure elle-même.

8. Procédé selon l'une quelconque des revendications précédentes dans lequel l'étape d'érection comprend, avant la sous-étape i), une sous-étape supplémentaire dans laquelle au moins une poutre de la première pluralité de poutres et au moins une plateforme d'une première section de la sous-structure sont érigées sur un site de stockage.

9. Procédé selon l'une quelconque des revendications précédentes dans lequel la n^{e} poutre (6) de la première pluralité (4) de poutres est positionnée après la poutre de la première voie de transport (7) formant la seconde extrémité et la y^{e} plateforme (8) est positionnée après la plateforme de la voie de service (9) formant la seconde extrémité.

10. Procédé selon l'une quelconque des revendications précédentes dans lequel, à l'étape b), les véhicules (17) sont configurés avec les segments de tube (14) à la première extrémité de la sous-structure.

11. Partie (1) d'une structure de transport pour des nacelles se déplaçant sensiblement sans frottement d'air dans un ensemble de segments de tube placé sous une faible pression d'air, la partie de l'infrastructure de transport comprenant :
- une sous-structure (2) comprenant une pluralité de piliers (3), une première pluralité (4) de poutres (6) positionnées sur au moins certains des piliers et formant une première voie de transport (7) allant d'une première extrémité de la sous-structure à une seconde et une pluralité de plateformes (8), soit positionnées sur les piliers, soit reliées aux poutres de la première voie de transport, et formant une voie de service (9) allant de la première extrémité de la sous-structure à la seconde,
- une superstructure (11) comprenant un premier ensemble (12) de segments de tube (14) positionné sur la première voie de transport, le premier ensemble pouvant être placé sous une faible pression d'air et pouvant permettre la circulation de nacelles se déplaçant sensiblement sans frottement d'air dans les segments de tube.

12. Partie d'une structure de transport selon la revendication 11 dans laquelle la première voie de transport (7) est composée d'une voie continue de poutres (6).

13. Partie d'une structure de transport selon la revendication 11 dans laquelle la première voie de transport (7) est composée de deux voies continues de poutres (6), parallèles l'une à l'autre.

14. Partie d'une structure de transport selon l'une quelconque des revendications 11 à 13 dans laquelle la superstructure comprend un second ensemble (13) de segments de tube (14) positionné sur le premier ensemble (12) de segments de tube.

15. Partie d'une structure de transport selon l'une quelconque des revendications 11 à 14, dans laquelle la sous-structure ne comprend pas une seconde pluralité de poutres (6) positionnée sur au moins certains des piliers et formant une seconde voie de transport.
